# EUROPÄISCHE PATENTSCHRIFT

(11) **EP 3 552 807 B1**
(45) Veröffentlichungstag und Bekanntmachung des Hinweises auf die Patenterteilung: **02.06.2021**
(21) Anmeldenummer: 19167299.7
(22) Anmeldetag: 04.04.2019
(51) Int. Cl.: B29C 70/24, B29C 70/42, B29C 65/00, B29B 11/16, B29C 37/00

(54) **FASERVERBUNDBAUTEIL, HYBRIDBAUTEIL UND VERFAHREN ZUM HERSTELLEN EINES FASERVERBUNDBAUTEILS**
FIBRE COMPOUND COMPONENT, HYBRID COMPONENT AND METHOD FOR PRODUCING A FIBRE COMPOUND COMPONENT
COMPOSANT EN FIBRES COMPOSITES, COMPOSANT HYBRIDE ET PROCÉDÉ DE FABRICATION D'UN COMPOSANT EN FIBRES COMPOSITES

(30) Priorität: 12.04.2018 DE 102018108745
(43) Veröffentlichungstag der Anmeldung: 16.10.2019
(73) Patentinhaber: Universität Stuttgart, 70174 Stuttgart (DE); Deutsche Institute für Textil- und Faserforschung Denkendorf, 73770 Denkendorf (DE)
(72) Erfinder: Born, Larissa, 73207 Plochingen (DE); Götz, Theodor Gresser, 70192 Stuttgart (DE); Milwich, Markus, 73529 Schwäbisch-Gmünd (DE)
(74) Vertreter: DREISS Patentanwälte PartG mbB

(56) Entgegenhaltungen:
- WO-A2-2004/041528
- US-A- 6 051 089

## Beschreibung

Die Erfindung betrifft ein Faserverbundbauteil zur Verstärkung und/oder Verbindung von Bauelementen. Zudem betrifft die Erfindung ein Hybridbauteil mit einer erstarrenden oder erstarrten Gussmasse und einem solchen Faserverbundbauteil. Schließlich betrifft die Erfindung ein Verfahren zum Herstellen eines Faserverbundbauteils zur Verstärkung und/oder Verbindung von Bauelementen.

Zur Verbindung oder Befestigung von Bauelementen aneinander sind aus dem Stand der Technik bspw. Klebeverbindungen oder Nietverbindungen bekannt. Bei Klebeverbindungen wird regelmäßig versucht, die Verbindung der Bauelemente aneinander durch Anrauen einer Verbindungsoberfläche der Bauteile zu optimieren, um eine Haftungsverbesserung zu erzielen.

Zudem ist es aus dem Stand der Technik bekannt, ein Faserverbundbauteil während dessen Entstehungsprozess an ein anderes Bauelement anzubinden, bspw. wenn es sich bei dem anderen Bauelement um eine Gussmasse (Kernmaterial oder Hinterspritzen) handelt. Zur Haftungsverbesserung kann das Faserverbundbauteil angeraut oder zur Strukturierung seiner Oberfläche mit einem textilen Gitter versehen werden.

Allerdings ist problematisch, dass diese Lösungen teilweise mit Materialverschleiß und teilweise mit eingebrachtem Fremdmaterial arbeiten. Bei Klebeverbindungen wird zum Anrauen Material abgetragen, was die Bauteilfestigkeit reduziert (Abnahme der Materialstärke und ggf. entstehende Kerbwirkung). Insbesondere bei Verbindung mit einer Gussmasse kann aufgrund der Schwindung der Gussmasse eine sichere Verbindung nicht immer gewährleistet werden. Daher werden Klebeverbindungen aus Sicherheitsgründen durch weitere Befestigungselemente, bspw. Nieten, verstärkt. Dies kann den Recycling-Prozess erschweren. Daher besteht Optimierungspotential. WO 2004/041528 A2 offenbart ein Faserverbundbauteil nach dem Oberbegriff des Anspruchs.

Der Erfindung liegt die Aufgabe zugrunde, mit einfachen konstruktiven Mitteln eine zuverlässige Verstärkung von Bauteilen durch Bereitstellen einer sicheren Verbindung zu ermöglichen. Dabei ist wünschenswert, dass durch das Faserverbundbauteil stabile Verbindungen von Bauteilen ermöglicht werden.

Die Erfindung löst diese Aufgabe durch ein Faserverbundbauteil mit den Merkmalen des Anspruchs 1.

Diese beanspruchte Ausgestaltung trägt zu einer zuverlässigen und stabilen Verstärkung und/oder Verbindung von Bauelementen bei, da mittels des Faserverbundbauteils ein Bauelement verstärkt oder mit einem anderen Bauelement verbunden werden kann, wobei die Stiftabschnitte als formschlüssige Verbindungselemente dienen. Mit anderen Worten stellen die Stiftabschnitte Ankerpunkte zur (formschlüssigen) Anbindung des Faserverbundbauteils an einem oder mehreren Bauelementen dar. Durch die Stiftabschnitte kann auch bei Schwindung eines Bauelements, bspw. infolge Trocknung oder Vernetzung, oder bei grundsätzlich gegebener geringer Haftung eine zuverlässige Anbindung des Faserverbundbauteils am Bauelement erreicht werden. Durch den Verstärkungsfaden ist im Faserverbundbauteil eine Verstärkung in Höhenrichtung (Haupt- bzw. Längserstreckungsrichtung der Stiftabschnitte) eingebracht, was zu einer stabilen Ausgestaltung des Faserverbundbauteils beiträgt und das Risiko von Delamination erheblich reduziert ("Z-Verstärkung" im Faserverbundbauteil).

Der Verstärkungsfaden kann bereits vor dem Imprägnieren mit dem textilen Trägermaterial verbunden werden, so dass bei einem Imprägnieren das textile Trägermaterial und der Verstärkungsfaden vorzugsweise gleichzeitig mit Matrixmaterial getränkt bzw. von diesem umgeben werden. Dies sorgt für eine stabile Ausgestaltung, da das textile Trägermaterial durch Einbringen des Verstärkungsfadens nicht beschädigt wird und die Kontinuität des Faserverlaufs erhalten bleibt. Zudem wird die Kontinuität des Herstellungsprozesses eines Faserverbundbauteils nicht unterbrochen. Ebenfalls denkbar ist, dass als Trägermaterial ein vorimprägniertes Material (Prepreg) und/oder als Verstärkungsfaden ein vorimprägnierter Faden (Pretow) eingesetzt werden. Diese können nach dem Einbringen des Verstärkungsfadens oder Pretows gemeinsam konsolidieren.

Durch die Ausgestaltung der Stiftabschnitte mit Matrixmaterial und den darin angeordneten Abschnitten des Verstärkungsfadens wird kein Fremdmaterial als Verbindungselement eingebracht (Stiftabschnitte und Basisabschnitt bestehen aus dem gleichen oder einem ähnlichen Matrixmaterial). Die Haftung zum textilen Trägermaterial ist aufgrund der textilen Verankerung und des uniformen Materialaufbaus gegeben. Durch die Kontinuität des Faserverlaufs wird eine durch das Faserverbundbauteil aufzunehmende Kraft über die Gesamtlänge des Faserverlaufes aufgenommen. Die Stiftabschnitte beeinflussen die Bauteilfestigkeit folglich nicht nur durch die Z-Verstärkung positiv, sondern auch durch geringeres Schwachstellenpotential verglichen mit bekannten Verbindungselementen.

Bei dem textilen Trägermaterial handelt es sich insbesondere um ein flächiges, insbesondere zweidimensional oder dreidimensional ausgestaltetes, textiles Trägerelement, das auch als "textiler Preform" bezeichnet werden kann. Die (hiervon abragenden) Stiftabschnitte weisen erfindungsgemäß eine stabförmige oder zylindrische Gestalt auf, mit einem freien Ende. Die Haupterstreckungsrichtung der Stiftabschnitte verläuft jeweils insbesondere entlang einer Geraden, bspw. orthogonal zum Basisabschnitt.

Das Faserverbundbauteil stellt insbesondere ein Bauteil mit davon abragenden Stiftabschnitten dar, wobei die Stiftabschnitte als integrierte Verbinderelemente gesehen werden können. Die Anzahl der Stiftabschnitte pro Flächeneinheit, die Größe, die Ausrichtung und/oder die Anordnung der Stiftabschnitte ist flexibel einstellbar. Damit entsteht durch die Stiftabschnitte ein individuell an das zu befestigende oder zu verstärkende Bauteil anpassbares Verbindungselement.

Der Verstärkungsfaden ist in die Stiftabschnitte und in das textile Trägermaterial eingebracht. Der Verstärkungsfaden dient zur Stabilisierung und Lastaufnahme im Faserverbundbauteil. Der Verstärkungsfaden überlappt sich erfindungsgemäß in den Stiftabschnitten, in Erstreckungsrichtung der Stiftabschnitte, so dass in den Stiftabschnitten jeweils Schlaufen oder Ösen gebildet sind (einander überlappende Teilabschnitte des Verstärkungsfadens mit Schlaufen oder Ösen in den Stiftabschnitten). Die Stiftabschnitte können sich relativ zum Basisabschnitt orthogonal erstrecken, bspw. parallel zueinander. Die Verstärkungsstifte können in mehreren Reihen, fluchtend oder versetzt zueinander, am Basisabschnitt ausgebildet sein, je nach gewünschter Größe des Faserverbundbauteils.

Im Rahmen einer bevorzugten Ausgestaltung können die Abschnitte des Verstärkungsfadens jeweils durch das textile Trägermaterial hindurch geführt sein. Hieraus ergibt sich eine besonders stabile Anbindung des Verstärkungsfadens am textilen Trägermaterial. Der Verstärkungsfaden kann am textilen Trägermaterial vernäht sein, indem der Verstärkungsfaden von einem Stiftabschnitt kommend an einer (ersten) Einstichstelle durch das textile Trägermaterial auf die von den Stiftabschnitten abgewandte Seite des textilen Trägermaterials hindurchgeführt ist und an einer weiteren, von der ersten Einstichstelle beabstandeten Einstichstelle durch das textile Trägermaterial zu einem weiteren Stiftabschnitt geführt ist (ähnlich einem Tuftingverfahren).

Im Konkreten kann das Matrixmaterial oder die Vorimprägnierung aus einem Kunststoff, insbesondere einem Duroplast oder einem Thermoplast, oder aus keramischem Material gebildet sein. Hiermit kann ein geeignetes und hinreichend stabiles Matrixmaterial bereitgestellt werden. Für eine möglichst schnelle und gleichmäßige Imprägnierung ist ein Matrixmaterial mit vergleichsweise niedriger Viskosität von Vorteil.

In zweckmäßiger Weise kann der Verstärkungsfaden aus synthetischen Fasern, insbesondere Kohlenstofffasern, Glasfasern, Aramidfasern oder aus mineralischen oder keramischen Fasern, insbesondere Basaltfasern und Keramikfasern, oder aus natürlichen Fasern, insbesondere Sisal, Kokos, Hanf, Banane oder Flachs, gebildet sein. Hiermit kann ein hinreichend stabiler und hinsichtlich Materialeigenschafen und Materialpaarung geeigneter Verstärkungsfaden bereitgestellt werden. Unabhängig vom gewählten Material ist der Verstärkungsfaden vorzugsweise endlos ausgebildet. Wie oben bereits erwähnt, kann der Verstärkungsfaden vorimprägniert sein (Pretow).

In vorteilhafter Weise kann das textile Trägermaterial aus einem Gewebe oder einem Vlies gebildet sein. Hiermit kann ein für den Anwendungsfall hinreichend geeignetes und stabiles Trägermaterial bereitgestellt werden. Wie oben bereits erwähnt, kann das textile Trägermaterial vorimprägniert sein (Prepreg).

Im Rahmen einer bevorzugten Ausgestaltung können sich die Stiftabschnitte jeweils in gleicher Richtung oder in unterschiedlichen Richtungen vom Basisabschnitt weg erstrecken (vorzugsweise voneinander separate Stiftabschnitte). Hiermit lässt sich eine stabile Befestigung des Faserverbundbauteils an einem Bauelement erzielen. Sind die Stiftabschnitte jeweils in gleicher Richtung orientiert, ist die Herstellung des Faserverbundbauteils erleichtert. Bei Erstreckung in unterschiedlichen Richtungen wird eine vergleichsweise stabile Anbindung des Faserverbundbauteils an einem Bauelement ermöglicht. Die Stiftabschnitte können auch von einer Stelle oder einem Bereich ausgehend in mehrere Richtungen (sternförmig) orientiert sein, so dass eine Art Stift-Büschel gebildet wird. Dies lässt sich durch den Einsatz von mehrachsigen Robotern bei der Herstellung der Stiftabschnitte am Trägermaterial realisieren.

In vorteilhafter Weise kann sich der Basisabschnitt entlang einer Ebene erstrecken, zu einem Zylindermantel geformt sein oder an eine zwei- oder dreidimensionale Kontur eines zu verstärkenden oder zu verbindenden Bauteils angepasst sein. Somit ist mit dem Faserverbundbauteil eine Verstärkung oder Verbindung unterschiedlicher Bauelemente ermöglicht. Bei einer ebenen Ausgestaltung des Basisabschnitts kann ein Bauelement an einer Körperseite verstärkt werden. Bei zylindrischer Ausgestaltung kann das Faserverbundbauteil ein Bauelement, bspw. eine Säule aus Beton oder dergleichen, umgeben. Auch eine beliebige dreidimensionale Kontur des Basisabschnitts ist denkbar, so dass auch unregelmäßig oder freigeformte Bauelemente verstärkt werden können. Zur Herstellung des Faserverbundbauteils kann der Kern, vorzugsweise ein Schaumkörper, entsprechend der Bauteilkontur geformt, insbesondere gefräst, werden. Das Kernmaterial kann auch aus anderen, mit einer Nadel einstechbaren Materialien gebildet sein, bspw. aus wasserlöslichem Formsand. Der Formsand kann auf einfache Weise mittels Wasser entfernt werden.

Die eingangs genannte Aufgabe wird auch durch ein Hybridbauteil (Hybridverbund) mit den Merkmalen des Anspruchs gelöst. Das Hybridbauteil weist eine erstarrende oder erstarrte Gussmasse und ein die Gussmasse an zumindest einer Seite begrenzendes, mit seinen Stiftabschnitten in die Gussmasse hineinragendes (erstes) Faserverbundbauteil auf. Das Faserverbundbauteil kann wie oben beschrieben ausgebildet sein.

Das Faserverbundbauteil kann somit zur Begrenzung oder Verstärkung der Gussmasse an zumindest einer Seite dienen. Dabei ragen die Stiftabschnitte in die Gussmasse hinein, so dass die Gussmasse und das Faserverbundbauteil formschlüssig miteinander verbunden sind. Bei zylinderförmiger Ausgestaltung des Basisabschnitts bzw. des Faserverbundbauteils (Stiftabschnitte nach innen ragend) kann das Faserverbundbauteil die Gussmasse nach außen umgeben. Somit kann ein hoch belastbares Hybridbauteil geschaffen werden, z.B. mit Gussmasse aus Beton und dem Faserverbundbauteil mit Verstärkungsstiften für Baukonstruktionen. In diesem Fall können sich durch die eingebrachten Stifte beide Materialien im Verbund hinsichtlich ihrer Festigkeiten ergänzen, insbesondere die Druckfestigkeit des Betons sowie Umschnürungswirkung und Zugfestigkeit der faserverstärkten Hülle (Faserverbundbauteil). Die Gussmasse kann im getrockneten bzw. ausgehärteten Zustand einen Festkörper bilden, bspw. in Form eines Kernmaterials oder einer Hinterspritzung. Als Gussmasse kann ein Bindemittel, Beton, Klebstoff und/oder Harz eingesetzt werden.

Im Rahmen einer bevorzugten Ausgestaltung kann ein zweites Faserverbundbauteil vorgesehen sein, welches wie oben beschrieben analog zum ersten Faserverbundbauteil ausgestaltet sein kann. Das zweite Faserverbundbauteil kann die Gussmasse an einer zweiten Seite begrenzen und mit seinen Stiftabschnitten in die Gussmasse hineinragen. Das erste Faserverbundbauteil und das zweite Faserverbundbauteil können derart angeordnet sein, dass deren Stiftabschnitte einander zugewandt sind. Hiermit kann eine beidseitige oder eine mehrseitige Begrenzung einer Gussmasse realisiert werden. Dabei ragen die Stiftabschnitte in die Gussmasse hinein, so dass die Gussmasse und die Faserverbundbauteile miteinander verbunden sind. Dadurch ist eine Verstärkung der Gussmasse an mehreren Seiten oder zu unterschiedlichen Richtungen des Bauteils ermöglicht.

In vorteilhafter Weise können das erste Faserverbundbauteil und das zweite Faserverbundbauteil derart zueinander angeordnet sein, dass die Stiftabschnitte des zweiten Faserverbundbauteils in Zwischenräumen zwischen den Stiftabschnitten des ersten Faserverbundbauteils angeordnet sind. Hiermit kann eine besonders stabile, sozusagen "steckerartige" Verbindung geschaffen werden, bei der die Stiftabschnitte jeweils in Zwischenräumen der anderen Stiftabschnitte angeordnet sind ("steckerartiges Ineinandergreifen"). Dabei können die Längsachsen der Stiftabschnitte bspw. parallel zueinander angeordnet sein. Hiermit ist mit dem Hybridbauteil eine Anwendung z.B. als hochbelastbare Klebestelle aus Faserverbundbauteilen mit Verstärkungsstiften und z.B. Klebstoff als Vergussmasse geschaffen. Ein solches Hybridbauteil (Hybridverbund) kann bei Anwendungen in der Windenergie (Rotorblätter oder Rotorblattenden), im Fahrzeug-, Bootsbau- und Flugzeugbau oder auch bei der Herstellung von Sportgeräten eingesetzt werden.

Die eingangs genannte Aufgabe wird auch durch ein Verfahren zum Herstellen eines Faserverbundbauteils zur Verstärkung und/oder Verbindung von Bauelementen mit den Merkmalen des Anspruchs 9.

Zunächst wird ein Verstärkungsfaden mittels einer den Verstärkungsfaden führenden Nadel im Wege eines Einstechens der Nadel durch ein textiles Trägermaterial (textiler Preform) hindurch in einen Kern (Tragekörper für das textile Trägermaterial), bspw. einen Schaumkörper, eingebracht. Durch Haftreibung zwischen Verstärkungsfaden und Kern verbleiben Abschnitte des Verstärkungsfadens (erfindungsgemäß als Schlaufe oder Öse) jeweils in Einstichlöchern im Kern. Dieses Einbringen kann so oft wiederholt werden, bis die gewünschte Größe des späteren Faserverbundbauteils (Länge einer Reihe und Anzahl der Reihen) erreicht ist.

Werden ein vorimprägniertes Trägermaterial (Prepreg) und ein vorimprägnierter Verstärkungsfaden (Pretow) verwendet, kann nach Einbringen des Verstärkungsfadens ein Konsolidieren erfolgen. Kommen keine vorimprägnierten Materialien zum Einsatz, kann nach einem Einbringen des Verstärkungsfadens stattdessen das textile Trägermaterial mit Matrixmaterial imprägniert werden, wobei auch die Einstichlöcher im Kern mit Matrixmaterial gefüllt werden (spätere Stiftabschnitte). Dabei werden die in Einstichlöcher eingebrachten Abschnitte des Verstärkungsfadens ebenfalls imprägniert. Erfindungsgemäß werden in den Einstichlöchern durch Konsolidierung sich von dem Trägermaterial weg erstreckende Stiftabschnitte mit einem freien Ende ausgebildet. Die Stiftabschnitte weisen erfindungsgemäß eine zylindrische oder stabförmige Gestalt auf.

Nach Konsolidierung (Trocknung oder Aushärtung) des Matrixmaterials bzw. der vorimprägnierten Komponenten wird der Kern (z.B. ein Schaumkörper) vom Faserverbundbauteil gelöst bzw. entfernt.

Auf diese Weise kann mit einfachen konstruktiven Mitteln ein stabiles Faserverbundbauteil hergestellt werden. Hinsichtlich der Vorteile wird auf die obigen Ausführungen im Zusammenhang mit dem Faserverbundbauteil verwiesen.

Im Rahmen einer bevorzugten Ausgestaltung kann das Matrixmaterial durch ein Infusions- oder durch ein Injektionsverfahren eingebracht werden. Auf diese Weise lässt sich für den jeweiligen Anwendungsfall eine geeignete Zuführung von Matrixmaterial bereitstellen. Ebenfalls denkbar ist, dass ein vorimprägniertes Trägermaterial (Prepreg) und ein vorimprägnierter Verstärkungsfaden (Pretow) verwendet werden, wie oben beschrieben. Dies erleichtert die Herstellung, da der Schritt des Imprägnierens der Komponenten mit Matrixmaterial entfallen kann.

Zur weiteren Ausgestaltung des Verfahrens können die im Zusammenhang mit der Vorrichtung beschriebenen Maßnahmen dienen.

Die Erfindung wird im Folgenden anhand der Figuren näher erläutert, wobei gleiche oder funktional gleiche Elemente ggf. lediglich einmal mit Bezugszeichen versehen sind. Es zeigen:
- Fig.1: ein Ausführungsbeispiel eines Faserverbundbauteils in einer schematischen Schnittansicht;
- Fig.2: ein Ausführungsbeispiel eines Hybridbauteils mit zwei Faserverbundbauteilen in einer schematischen Schnittansicht; und
- Fig.3a-e: ein Verfahren zum Herstellen eines Faserverbundbauteils anhand mehrerer schematischer Schnittansichten.

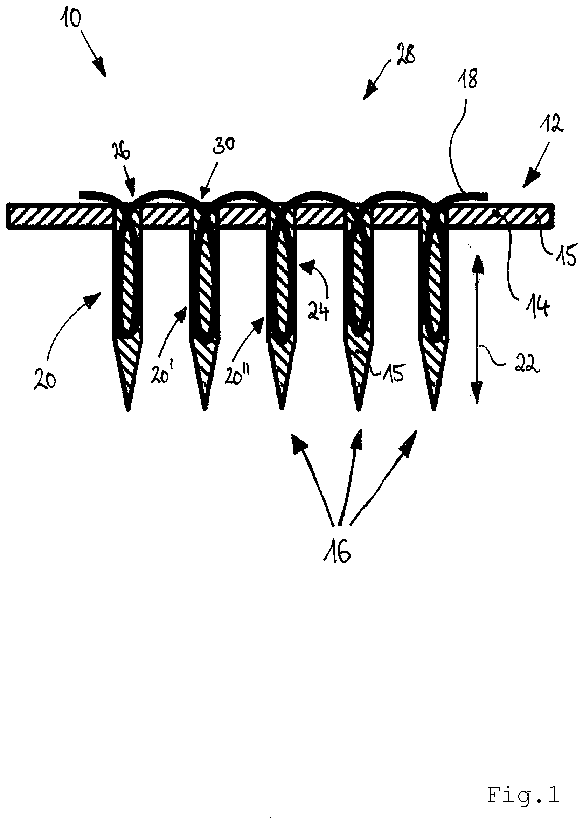

Figur 1 zeigt ein Faserverbundbauteil zur Verstärkung und/oder Verbindung von Bauelementen, welches insgesamt mit dem Bezugszeichen 10 bezeichnet ist. Das Faserverbundbauteil 10 weist einen (ebenen oder planaren) Basisabschnitt 12 auf, in dem ein textiles Trägermaterial 14 angeordnet ist. Zudem weist das Faserverbundbauteil 10 mehrere sich vom Basisabschnitt 12 weg erstreckende Stiftabschnitte 16 mit einem freien Ende auf. Vorliegend erstrecken sich die Stiftabschnitte 16 orthogonal vom Basisabschnitt 12 weg.

Das textile Trägermaterial 14 ist mit Matrixmaterial 15 imprägniert und die Stiftabschnitte 16 sind durch das Matrixmaterial 15 gebildet. Weiter ist ein Verstärkungsfaden 18 vorgesehen, der aufeinanderfolgende Abschnitte 20, 20', 20" (usw.) aufweist, die jeweils vom textilen Trägermaterial 14 in einen der Stiftabschnitte 16 und zurück zum textilen Trägermaterial 14 geführt sind. In den aufeinanderfolgenden Abschnitten 20, 20', 20" (usw.) des Verstärkungsfadens 18 überlappen sich Teilabschnitte hiervon entlang der Längserstreckungsrichtung 22 der Stiftabschnitte 16, so dass in den Stiftabschnitten 16 jeweils Schlaufen bzw. Ösen 24 gebildet sind.

Die Abschnitte 20, 20', 20" (usw.) des Verstärkungsfadens 18 sind jeweils durch das textile Trägermaterial 14 hindurch geführt. So ist der Verstärkungsfaden 18 von einem Stiftabschnitt 16 kommend an einer (ersten) Einstichstelle 26 durch das textile Trägermaterial 14 auf die von den Stiftabschnitten 16 abgewandte Seite 28 des textilen Trägermaterials 14 hindurchgeführt und an einer weiteren, von der ersten Einstichstelle 26 beabstandeten Einstichstelle 30 durch das textile Trägermaterial 14 zu einem weiteren Stiftabschnitt 16 geführt.

Das Matrixmaterial 15 kann aus einem Kunststoff, insbesondere einem Duroplast oder einem Thermoplast, oder aus keramischem Material gebildet sein. Der Verstärkungsfaden 18 kann aus synthetischen Fasern, insbesondere Kohlenstofffasern, Glasfasern, Aramidfasern oder aus mineralischen oder keramischen Fasern, insbesondere Basaltfasern und Keramikfasern oder aus natürlichen Fasern, insbesondere Sisal, Kokos, Hanf, Banane oder Flachs, gebildet sein. Das textile Trägermaterial 14 kann aus einem Gewebe oder einem Vlies gebildet sein. Bei nicht dargestellten Ausführungsformen können ein vorimprägniertes Trägermaterial 14 (Prepreg) und ein vorimprägnierter Verstärkungsfaden 18 (Pretow) verwendet werden.

Im vorliegenden Ausführungsbeispiel erstrecken sich die Stiftabschnitte 16 jeweils in gleicher Richtung (parallele Orientierung) vom Basisabschnitt 12 weg. Bei nicht dargestellten Ausführungsformen können sich die Stiftabschnitte 16 auch in unterschiedlichen Richtungen vom Basisabschnitt 12 weg erstrecken, bspw. durch voneinander separate unterschiedlich orientierte Stiftabschnitte oder sternförmig orientierte Stiftabschnitte, wie oben beschrieben.

Im vorliegenden Ausführungsbeispiel erstreckt sich der Basisabschnitt 12 entlang einer Ebene. Bei nicht dargestellten Ausführungsformen kann der Basisabschnitt 12 auch zu einem Zylindermantel geformt oder an eine zwei- oder dreidimensionale Kontur eines zu verstärkenden oder zu verbindenden Bauteils angepasst sein, wie oben beschrieben.

In der Darstellung in Figur 1 ist ein Schnitt durch eine Reihe von Stiftabschnitten 16 gezeigt. Es versteht sich, dass das Faserverbundbauteil 10 mehrere Reihen von mit Verstärkungsfaden 18 versehenen Stiftabschnitten 16 in gewünschter Länge in fluchtender oder versetzter Anordnung aufweisen kann.

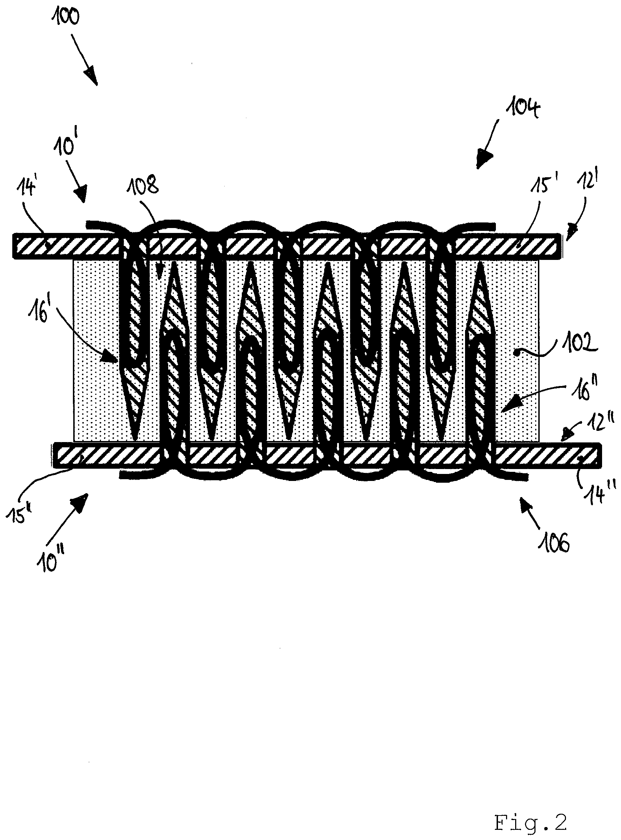

Figur 2 zeigt ein Hybridbauteil, welches insgesamt mit dem Bezugszeichen 100 bezeichnet ist. Das Hybridbauteil 100 weist eine erstarrende oder erstarrte Gussmasse 102 und ein die Gussmasse 102 an zumindest einer Seite 104 begrenzendes, mit seinen Stiftabschnitten 16 in die Gussmasse 102 hineinragendes erstes Faserverbundbauteil 10' auf.

Das Faserverbundbauteil 10' ist insbesondere wie voranstehend beschrieben ausgebildet und begrenzt die Gussmasse 102 an der Seite 104 nach außen. Die Gussmasse 102 und das Faserverbundbauteil 10' sind mittels der Stiftabschnitte 16' des Faserverbundbauteils 10' formschlüssig miteinander verbunden.

Des Weiteren ist ein zweites Faserverbundbauteil 10" vorgesehen, welches die Gussmasse 102 an einer zweiten Seite 106 begrenzt und mit seinen Stiftabschnitten 16" in die Gussmasse 102 hineinragt. Somit ist das zweite Faserverbundbauteil 10" mittels der Stiftabschnitte 16" formschlüssig mit der Gussmasse 102 verbunden. Das erste Faserverbundbauteil 10' und das zweite Faserverbundbauteil 10" sind derart angeordnet, dass deren Stiftabschnitte 16', 16" einander zugewandt sind.

Dabei sind das erste Faserverbundbauteil 10' und das zweite Faserverbundbauteil 10" derart zueinander angeordnet, dass die Stiftabschnitte 16" des zweiten Faserverbundbauteils 10" in Zwischenräumen 108 zwischen den Stiftabschnitten 16' des ersten Faserverbundbauteils 10' angeordnet sind.

Dabei greifen die Stiftabschnitte 16' und die Stiftabschnitte 16" "steckerartig" ineinander.

Mit dem Hybridbauteil 100 (Hybridverbund) kann eine Anwendung z.B. als hochbelastbare Klebestelle aus Faserverbundbauteilen 10', 10" mit Verstärkungsstiften 16', 16" und z.B. Klebstoff als Vergussmasse 102 geschaffen werden, welches in verschiedenen technischen Gebieten angewendet werden kann wie oben beschrieben. Auch andere Anwendungen sind denkbar, bspw. ein mittels Faserverbundbauteilen 10', 10" verstärkter Betonkörper (Beton als Gussmasse 102).

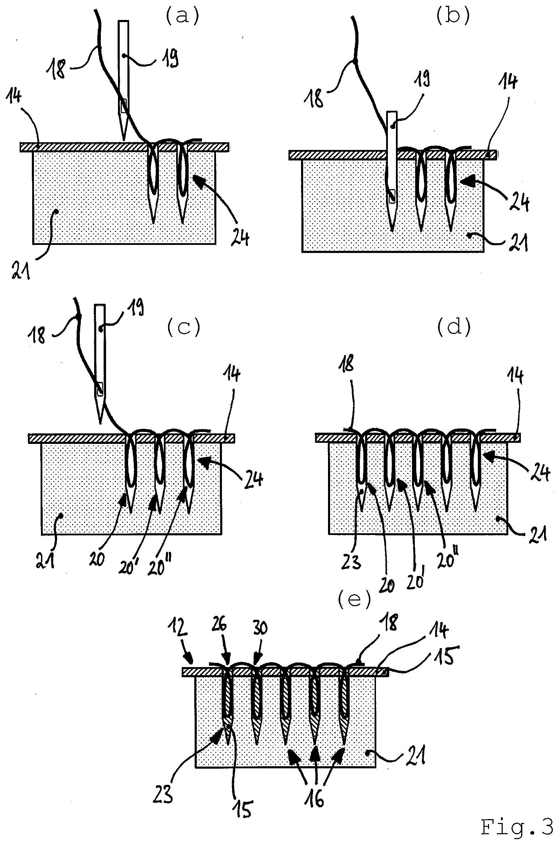

In Figur 3 ist Verfahren zum Herstellen eines Faserverbundbauteils 10 zur Verstärkung und/oder Verbindung von Bauelementen veranschaulicht, welches folgendermaßen abläuft:
Zunächst wird ein Verstärkungsfaden 18 mittels einer den Verstärkungsfaden 18 führenden Nadel 19 im Wege eines Einstechens der Nadel 19 durch ein textiles Trägermaterial 14 hindurch in einen Kern 21 eingebracht, der vorliegend als Schaumkörper 21 ausgebildet ist (siehe Fig. 3(a) und Fig. 3(b)). Durch Haftreibung zwischen dem Verstärkungsfaden 18 und dem als Kern 21 verwendeten Schaumkörper 21 verbleiben Abschnitte 20, 20', 20" bzw. Teilabschnitte des Verstärkungsfadens 18 als Schlaufe oder Öse 24 jeweils in Einstichlöchern 23 im Schaumkörper 21 (siehe Fig. 3(c) und Fig. 3(d)).

Dies wird solange wiederholt, bis die gewünschte Größe (gewünschte Länge einer Reihe mit Anzahl an Schlaufen 24 und Anzahl der Reihen) des späteren Faserverbundbauteils 10 erreicht ist.

Anschließend wird das textile Trägermaterial 14 mit Matrixmaterial 15 imprägniert, wobei auch die Einstichlöcher 23 mit Matrixmaterial 15 gefüllt werden (siehe Fig. 3(e)). Dabei werden die in Einstichlöcher 23 eingebrachten Abschnitte 20, 20', 20" des Verstärkungsfadens 18 durch Matrixmaterial 15 benetzt und durch dieses umschlossen (spätere Stiftabschnitte 16). Bei nicht dargestellten Ausführungsformen können ein vorimprägniertes Trägermaterial 14 (Prepreg) und ein vorimprägnierter Verstärkungsfaden 18 (Pretow) verwendet werden. Diese können nach einem Einbringen des Verstärkungsfadens 18 gemeinsam konsolidieren, wie oben erläutert. Durch Konsolidierung werden in den Einstichlöchern 23 sich von dem Trägermaterial 14 weg erstreckende Stiftabschnitte 16 mit freiem Ende ausgebildet.

Nach Konsolidierung (Trocknung oder Aushärtung) des Matrixmaterials 15 bzw. der vorimprägnierten Komponenten kann der Schaumkörper 21 vom Faserverbundbauteil 10 gelöst bzw. entfernt werden (nicht dargestellt). Dadurch ergibt sich das Faserverbundbauteil 10 mit seinem Basisabschnitt 12 und den sich vom Basisabschnitt 12 weg erstreckenden Stiftabschnitten 16 (vgl. Figur 1).

Das Matrixmaterial 15 kann durch ein Infusionsverfahren oder Injektionsverfahren eingebracht werden, wie oben beschrieben. Alternativ hierzu können ein vorimprägniertes Trägermaterial 14 (Prepreg) und ein vorimprägnierter Verstärkungsfaden 18 (Pretow) verwendet werden.

## Patentansprüche

1. Faserverbundbauteil (10) zur Verstärkung und/oder Verbindung von Bauelementen, mit einem in einem Basisabschnitt (12) angeordneten textilen Trägermaterial (14) und mehreren sich vom Basisabschnitt (12) weg erstreckenden Stiftabschnitten (16), wobei das textile Trägermaterial (14) mit Matrixmaterial (15) imprägniert und die Stiftabschnitte (16) durch das Matrixmaterial (15) gebildet sind, und wobei ein Verstärkungsfaden (18) vorgesehen ist, der aufeinander folgende Abschnitte (20, 20', 20") aufweist, wobei die Stiftabschnitte (16) eine zylindrische oder stabförmige Gestalt mit einem freien Ende aufweisen, wobei die aufeinander folgenden Abschnitte (20, 20', 20") des Verstärkungsfadens (18) jeweils vom textilen Trägermaterial (14) in einen der Stiftabschnitte (16) und in diesem Stiftabschnitt (16) zurück zum textilen Trägermaterial (14) geführt sind, **dadurch gekennzeichnet, dass** sich Teilabschnitte des Verstärkungsfadens (18) entlang der Längsrichtung (22) der Stiftabschnitte (16) überlappen, so dass in den Stiftabschnitten (16) jeweils Schlaufen oder Ösen (24) gebildet sind.

2. Faserverbundbauteil (10) nach Anspruch 1, **dadurch gekennzeichnet, dass** die Abschnitte (20, 20', 20") des Verstärkungsfadens (18) jeweils durch das textile Trägermaterial (14) hindurch geführt sind.

3. Faserverbundbauteil (10) nach Anspruch 1 oder 2, **dadurch gekennzeichnet, dass** das Matrixmaterial (15) aus einem Kunststoff, insbesondere einem Duroplast oder einem Thermoplast, oder aus keramischem Material gebildet ist und/oder dass der Verstärkungsfaden (18) aus synthetischen Fasern, insbesondere Kohlenstofffasern, Glasfasern, Aramidfasern oder aus mineralischen oder keramischen Fasern, insbesondere Basaltfasern und Keramikfasern oder aus natürlichen Fasern, insbesondere Sisal, Kokos, Hanf, Banane oder Flachs, gebildet ist und/oder dass das textile Trägermaterial (14) aus einem Gewebe oder einem Vlies gebildet ist.

4. Faserverbundbauteil (10) nach einem der voranstehenden Ansprüche, **dadurch gekennzeichnet, dass** die Stiftabschnitte (16) sich jeweils in gleicher Richtung oder in unterschiedlichen Richtungen vom Basisabschnitt (12) weg erstrecken.

5. Faserverbundbauteil (10) nach einem der voranstehenden Ansprüche, **dadurch gekennzeichnet, dass** sich der Basisabschnitt (12) entlang einer Ebene erstreckt, zu einem Zylindermantel geformt ist oder an eine zwei- oder dreidimensionale Kontur eines zu verstärkenden oder verbindenden Bauteils angepasst ist.

6. Hybridbauteil (100) mit einer erstarrenden oder erstarrten Gussmasse (102) und einem die Gussmasse (102) an zumindest einer Seite (104) begrenzenden, mit seinen Stiftabschnitten (16') in die Gussmasse (102) hineinragenden Faserverbundbauteil (10') nach einem der voranstehenden Ansprüche.

7. Hybridbauteil (100) nach Anspruch 6, **gekennzeichnet durch** ein zweites Faserverbundbauteil (10") nach einem der Ansprüche 1 bis 5, wobei das zweite Faserverbundbauteil (10") die Gussmasse (102) an einer zweiten Seite (106) begrenzt und mit seinen Stiftabschnitten (16'') in die Gussmasse (102) hineinragt und dass das erste Faserverbundbauteil (10') und das zweite Faserverbundbauteil (10") derart angeordnet sind, dass deren Stiftabschnitte (16', 16'') einander zugewandt sind.

8. Hybridbauteil (100) nach Anspruch 7, **dadurch gekennzeichnet, dass** die Stiftabschnitte (16'') des zweiten Faserverbundbauteils (10") in Zwischenräumen (108) zwischen den Stiftabschnitten (16') des ersten Faserverbundbauteils (10') angeordnet sind.

9. Verfahren zum Herstellen eines Faserverbundbauteils (10) zur Verstärkung und/oder Verbindung von Bauelementen, insbesondere eines Faserverbundbauteils (10) nach einem der Ansprüche 1 bis 5, mit folgenden Schritten:
- Einbringen eines Verstärkungsfadens (18) mittels einer den Verstärkungsfaden (18) führenden Nadel (19) im Wege eines Einstechens der Nadel (19) durch ein textiles Trägermaterial (14) hindurch in einen Kern (21), wobei Abschnitte (20, 20', 20") des Verstärkungsfadens (18) als Schlaufe oder Öse (24) jeweils in Einstichlöchern (23) im Kern (21) verbleiben,
- Imprägnieren des textilen Trägermaterials (14) mit Matrixmaterial (15) sowie Füllen der Einstichlöcher (23) mit Matrixmaterial (15) oder Konsolidierung des Trägermaterials (14) und des Verstärkungsfadens (18) bei Verwendung von vorimprägniertem Trägermaterial (14) und vorimprägniertem Verstärkungsfaden (18), wobei in den Einstichlöchern (23) durch Konsolidierung sich von dem Trägermaterial (14) weg erstreckende Stiftabschnitte (16), die eine zylindrische oder stabförmige Gestalt aufweisen, mit einem freien Ende ausgebildet werden, und
- Entfernen des Kerns (21) nach Konsolidierung.

10. Verfahren nach Anspruch 9, **dadurch gekennzeichnet, dass** das Matrixmaterial (15) durch ein Infusions- oder durch ein Injektionsverfahren eingebracht wird.

## Claims

1. Fibre composite component (10) for reinforcing and/or connecting building components, with a textile carrier material (14) arranged in a base section (12) and several pin sections (16) extending away from the base section (12), wherein the textile carrier material (14) is impregnated with matrix material (15) and the pin sections (16) are formed by the matrix material (15), and wherein a reinforcement yarn (18) is provided which comprises successive sections (20, 20', 20"), wherein the pin sections (16) have a cylindrical or rod-shaped form with a free end, wherein the successive sections (20, 20', 20") of the reinforcement yarn (18) are in each case passed from the textile carrier material (14) into one of the pin sections (16) and, within this pin section (16), back to the textile carrier material (14), **characterised in that** partial sections of the reinforcement yarn (18) overlap along the longitudinal direction (22) of the pin sections (16), so that loops or eyelets (24) are in each case formed in the pin sections (16).

2. Fibre composite component (10) according to claim 1, **characterised in that** the sections (20, 20', 20") of the reinforcement yarn (18) are in each case passed through the textile carrier material (14).

3. Fibre composite component (10) according to claim 1 or 2, **characterised in that** the matrix material (15) is formed of a plastic, in particular a thermoset or a thermoplastic, or of ceramic material, and/or that the reinforcement yarn (18) is formed of synthetic fibres, in particular carbon fibres, glass fibres, aramid fibres or of mineral or ceramic fibres, in particular basalt fibres and ceramic fibres or of natural fibres, in particular sisal, coconut, hemp, banana or flax, and/or that the textile material (14) is formed from a fabric or a non-woven material.

4. Fibre composite component (10) according to one of the preceding claims, **characterised in that** the pin sections (16) in each case extend away from the base section (12) in the same direction or in different directions.

5. Fibre composite component (10) according to one of the preceding claims, **characterised in that** the base section (12) extends along a plane, is formed into a cylinder barrel or is adapted to a two- or three-dimensional contour of a component which is to be reinforced or connected.

6. Hybrid component (100) with a solidifying or solidified casting compound (102) and a fibre composite component (10') according to one of the preceding claims limiting the casting compound (102) on at least one side (104) with its pin sections (16') projecting into the casting compound (102).

7. Hybrid component (100) according to claim 6, **characterised by** a second fibre composite component (10") according to one of claims 1 to 5, wherein the second fibre composite component (10") limits the casting compound (102) on a second side (106) and projects with its pin sections (16") into the casting compound (102), and that the first fibre composite component (10') and the second fibre composite component (10") are arranged such that their pin sections (16', 16'') face each other.

8. Hybrid component (100) according to claim 7, **characterised in that** the pin sections (16'') of the second fibre composite component (10") are arranged in gaps (108) between the pin sections (16') of the first fibre composite component (10').

9. Method for producing a fibre composite component (10) for reinforcing and/or connecting building components, in particular a fibre composite component (10) according to one of the claims 1 to 5, with the following steps:
- introducing a reinforcement yarn (18) by means of a needle (19) carrying the reinforcement yarn (18) by piercing the needle (19) through a textile carrier material (14) into a core (21), wherein sections (20, 20', 20") of the reinforcement yarn (18) in each case remain, as a loop or eyelet (24), in stitch holes (23) in the core (21)
- impregnating the textile carrier material (14) with matrix material (15) and filling the stitch holes (23) with matrix material (15), or consolidating the carrier material (14) and the reinforcement yarn (18) if using pre-impregnated carrier material (14) and pre-impregnated reinforcement yarn (18), wherein pin sections 30 (16) extending away from the carrier material (14), which have a cylindrical or rod-shaped form, with a free end, are formed in the stitch holes (23) through consolidation, and
- removing the core (21) after consolidation.

10. Method according to claim 9, **characterised in that** the matrix material (15) is introduced by means of an infusion method or an injection method.

## Revendications

1. Pièce composite en fibres (10) destinée à renforcer et/ou relier des éléments structurels, avec un matériau support textile agencé dans une section formant base (12), et plusieurs sections formant broche (16) s'étendant à distance de la section formant base (12), dans laquelle le matériau support textile (14) est imprégné de matériau de matrice (15) et les sections formant broche (16) sont formées grâce au matériau de matrice, et dans laquelle un fil de renfort (18) présentant des sections (20, 20', 20") successives est prévu, dans laquelle les sections formant broche (16) présentent une forme cylindrique ou de tige avec une extrémité libre, dans laquelle les sections (20, 20', 20") successives du fil de renfort (18) sont guidées respectivement depuis le matériau support textile (14) jusque dans une des sections formant broche (16) et reviennent de ladite section formant broche (16) au matériau support textile (14), **caractérisée en ce que** des sous-sections du fil de renfort (18) se chevauchent le long de la direction longitudinale (22) des sections formant broche (16), de sorte que des boucles ou oeillets (24) sont respectivement formé(e)s dans les sections formant broche (16).

2. Pièce composite en fibres (10) selon la revendication 1, **caractérisée en ce que** les sections (20, 20', 20") du fil de renfort (18) sont guidées respectivement à travers le matériau support textile (14).

3. Pièce composite en fibres (10) selon la revendication 1 ou 2, **caractérisée en ce que** le matériau de matrice (15) est formé à partir d'une matière plastique, en particulier une matière plastique thermodurcissable ou thermoplastique, ou d'une matière céramique et/ou **en ce que** le fil de renfort (18) est formé à partir de fibres synthétiques, en particulier de fibres de carbone, de fibres de verre, de fibres d'aramide ou de fibres minérales ou céramiques, en particulier de fibres de basalte et de fibres céramiques, ou à partir de fibres naturelles, en particulier de sisal, de coco, de chanvre, de banane ou de lin, et/ou **en ce que** le matériau support textile (14) est formé à partir d'un tissu ou d'un intissé.

4. Pièce composite en fibres (10) selon l'une quelconque des revendications précédentes, **caractérisée en ce que** les sections formant broche (16) s'étendent respectivement, dans la même direction ou dans des directions différentes, à distance de la section formant base (12).

5. Pièce composite en fibres (10) selon l'une quelconque des revendications précédentes, **caractérisée en ce que** la section formant base (12) s'étend dans un plan, est formée en enveloppe de cylindre ou est adaptée à un contour bidimensionnel ou tridimensionnel d'une pièce à renforcer ou à relier.

6. Pièce hybride (100) avec une masse de coulée (102) solidifiée ou en cours de solidification et une pièce composite en fibres (10') selon l'une quelconque des revendications précédentes qui délimite la masse de coulée (102) au niveau d'au moins un côté (104) et dont les sections formant broche (16') font saillie dans la masse de coulée (102).

7. Pièce hybride (100) selon la revendication 6, **caractérisée par** une seconde pièce composite en fibres (10 ") selon l'une quelconque des revendications 1 à 5, dans laquelle la seconde pièce composite en fibres (10") délimite la masse de coulée (102) au niveau d'un second côté (106) et fait saillie dans la masse de moulage (102) avec ses sections formant broche (16") et **caractérisée en ce que** la première pièce composite en fibres (10') et la seconde pièce composite en fibres (10") sont agencées de telle manière que leurs sections formant broche (16', 16") sont tournées les unes vers les autres.

8. Pièce hybride (100) selon la revendication 7, **caractérisée en ce que** les sections formant broche (16") de la seconde pièce composite en fibres (10") sont agencées dans des espaces (108) situés entre les sections formant broche (16') de la première pièce composite en fibres (10').

9. Procédé de fabrication d'une pièce composite en fibres (10) destinée à renforcer et/ou relier des éléments structurels, en particulier une pièce composite en fibres (10) selon l'une quelconque des revendications 1 à 5, comprenant les étapes ci-dessous consistant à :
- introduire un fil de renfort (18) au moyen d'une aiguille (19) guidant le fil de renfort (18) au cours d'un enfoncement de l'aiguille (19) à travers un matériau support textile (14) jusque dans un corps (21), dans lequel des sections (20, 20', 20") du fil de renfort (18) demeurent dans le corps (21) sous forme de boucles ou d'oeillets (24) présent(e)s respectivement dans les trous de perforation (23),
- imprégner le matériau support textile (14) avec du matériau de matrice (15) et remplir les trous de perforation (23) avec du matériau de matrice (15) ou consolider le matériau support (14) et le fil de renfort (18) en utilisant un matériau support (14) pré-imprégné et un fil de renfort (18) pré-imprégné, dans lequel des sections formant broche (16) s'étendant à distance du matériau support (14) et présentant une forme cylindrique ou de tige sont réalisées avec une extrémité libre par consolidation dans les trous de perforation (23), et
- retirer le corps (21) après consolidation.

10. Procédé selon la revendication 9, **caractérisé en ce que** le matériau de matrice (15) est introduit grâce à un procédé de coulée ou grâce à un procédé d'injection.
